(19) Europäisches Patentamt
European Patent Office
Office européen des brevets

(11) **EP 2 486 305 B1**

(12) **EUROPÄISCHE PATENTSCHRIFT**

(45) Veröffentlichungstag und Bekanntmachung des Hinweises auf die Patenterteilung:
**15.01.2014   Patentblatt 2014/03**

(21) Anmeldenummer: **10776544.8**

(22) Anmeldetag: **30.09.2010**

(51) Int Cl.:
***F16H 1/28*** *(2006.01)*

(86) Internationale Anmeldenummer:
**PCT/EP2010/005960**

(87) Internationale Veröffentlichungsnummer:
**WO 2011/042131 (14.04.2011 Gazette 2011/15)**

(54) **STEGLOSES UMLAUFRÄDERGETRIEBE**

WEBLESS PLANETARY GEAR SET

TRAIN D'ENGRENAGE PLANETAIRE SANS SUPPORT

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **06.10.2009   DE 102009048429**
**13.10.2009   DE 102009049271**

(43) Veröffentlichungstag der Anmeldung:
**15.08.2012   Patentblatt 2012/33**

(73) Patentinhaber: **IMO Holding GmbH**
**91350 Gremsdorf (DE)**

(72) Erfinder: **FRANK, Hubertus**
**91315 Höchstadt (DE)**

(74) Vertreter: **Küchler, Stefan**
**Patentanwalt**
**Färberstrasse 20**
**90402 Nürnberg (DE)**

(56) Entgegenhaltungen:
**WO-A1-81/00899     WO-A1-2006/066985**
**DE-A1- 2 625 429     GB-A- 2 012 387**
**US-A- 4 726 259**

**Beschreibung**

Die Erfindung richtet sich auf ein Wolfrom'sches, stegloses Umlaufrädergetriebe für hohe Übersetzungen, umfassend zwei zueinander koaxiale, gegeneinander verdrehbare Gehäuseteile mit je einer Innenverzahnung an der betreffenden Innenseite, ein verzahntes Sonnenrad mit einem durch wenigstens eine Stirnseite des Gehäuses hindurch zugänglichen Anschluß für einen Antriebsmotor, sowie mehrere verzahnte Planetenräder, welche zwischen dem Sonnenrad und den Innenverzahnungen abrollen und fliegend gelagert sind, d.h. ohne weitere Führung an einem Steg oder Planetenradträger, sondern indem ihre Stirnseiten zwischen zwei ebenen, zueinander parallelen, ringförmigen Gleitflächen entlanggleiten, welche an den Innenseiten der Stirnflächen der beiden Gehäuseteile angeordnet sind.

Eine gattungsgemäße Anordnung ist dem Gebrauchsmuster DE 93 18 360 U1 zu entnehmen. Zwar lassen sich mit dem dort offenbarten, kompakten Getriebe große Unter- bzw. Übersetzungen erzielen. Auch ist dort ein festzulegendes und ein demgegenüber verdrehbares Gehäuseteil offenbart; zwischen beiden gibt es jedoch keine verschleißarme Drehlagerung, sondern allenfalls eine reibungsbehaftete Gleitlagerung, so dass ein solches Getriebe nur eine geringe Betriebsdauer haben kann.

Die Offenlegungsschrift DE 42 24 850 A1 zeigt eine demgegenüber abgewandelte Ausführungsform. Hier gibt es jedoch kein zweiteiliges Gehäuse, sondern nur ein einziges, festlegbares Gehäuse mit zwei Anschlußwellen oder -hohlwellen. Diese (Hohl-) Wellen sind mit reibungsarmen Wälzlagern entweder an dem Gehäuse oder aneinander gelagert, allerdings radial nahe der Drehachse in gegenüber den Planetenrädern axial versetzten Bereichen. Diese Art der Lagerung bedingt eine erhöhte axiale Bauhöhe des Getriebes, was in vielen Anwendungsfällen nicht erwünscht ist.

Das Dokument DE 2625429 A1 wird als nächstliegenden Stand der Technik angerden und offenbart die Merkmale des Oberbegriffs der Anspruchs 1.

Aus den Nachteilen des beschriebenen Standes der Technik resultiert das die Erfindung initiierende Problem, ein gattungsgemäßes Umlaufrädergetriebe derart weiterzubilden, dass eine lange Betriebsdauer erzielt werden kann, während gleichzeitig die Bauhöhe des Getriebes minimal sein soll, damit es bspw. nach Art eines Drehantriebs verwendet werden kann. Ein bevorzugtes Anwendungsgebiet soll dabei der Drehantrieb großer Anlagenteile sein wie bspw. im Rahmen der Schwenklager von Kranen, Baggern, etc., wobei es gilt, zusätzlich zu großen Drehmomenten auch erhebliche Axialkräfte und/oder Kippmomente zu beherrschen.

Die Lösung dieses Problems gelingt bei einem gattungsgemäßen, Wolfrom'schen, steglosen Umlaufrädergetriebe durch eine Wälzlagerung zwischen den beiden Gehäuseteilen, deren Wälzkörper auf Bahnen umlaufen, welche sich radial außerhalb wenigstens einer Innenverzahnung befinden, sowie auf einer axialen Höhe zwischen den beiden, gehäuseseitigen Gleitflächen zur Führung der Planetenräder, sowie dadurch, dass das Sonnenrad eine axiale Erstreckung aufweist, die kürzer ist als der Abstand zwischen den beiden Gehäuseabschlußplatten, und an seiner dem Anschluß für einen Antriebsmotor gegenüber liegenden Sitrnseite mittels einer Wälzlagerung an einem Lagerkörper abgetützt ist, der mit der gegenüber liegenden Gehäuseabschlußplatte verbunden ist.

Indem die Wälzlagerung auf der selben axialen Höhe angeordnet ist wie die Planetenräder, radial außerhalb eines diese umgebenden Innengewindes, muß die Bauhöhe des Getriebes nicht erhöht werden. Gleichzeitig bietet der große Radialabstand der Wälzkörper zu der Rotationsachse optimale Voraussetzungen, um auch große Kippmomente infolge günstiger Hebelverhältnisse sicher abzuleiten. Ferner ist bei dem vergrößerten Radialabstand der Wälzkörper auch der dortige Umfang relativ groß, so dass sich vergleichsweise viele Wälzkörper bereits in einer einzigen Reihe anordnen lassen, die allesamt auch sehr große Axialkräfte aufnehmen und zwischen den Ringen übertragen können. Mit dem erfindungsgemäßen Getriebe lassen sich extrem große Über- bzw. Untersetzungen erzeugen, bspw. in der Größenordnung von 1:500 bis etwa 1:1000. Dadurch lassen sich einerseits mit vergleichsweise kleinen Antriebsmotoren extrem große Drehmomente aufbringen; andererseits kann das Getriebe derart konzipiert werden, dass es selbsthemmende Eigenschaften hat und evtl. eine zusätzliche Bremse entbehrlich ist.

Indem das Getriebe auf Stege, d.h. Planetenradträger, verzichtet, ist innerhalb eines von der/den Wälzkörperlaufbahn(en) umschlossenen Zylinders kein Steg unterzubringen, und daher wird die axiale Bauhöhe etwa auf die Länge der Planetenräder zzgl. der beiden Gehäusestirnseiten reduziert. Gleichzeitig bietet eine Wälzlagerung unter Beherrschung enormer Axial- und Radialkräfte und Kippmomente eine um ein Vielfaches höhere Betriebsdauer im Vergleich zu einer Gleitlagerung zwischen den Gehäuseteilen. Wenn beide Gehäuseteile je eine zumindest bereichsweise ebene, innere Stirnfläche aufweisen, zwischen denen die Planetenräder geführt sind, liegen die Planetenräder mit ihren Stirnseiten jeweils an einer inneren Stirnseite beider Gehäuseteile an, wobei jedoch die relativen Umlaufgeschwindigkeiten der Planetenräder gegenüber beiden Gehäuseteilen unterschiedlich sind, so dass an beiden Stirnseiten eines Planetenrades unterschiedliche Gleitgeschwindigkeiten anzutreffen sind. Die Gleitflächen können wahlweise durch die Gehäusestirnplatten selbst gebildet sein, wobei es sich hierbei empfiehlt, dieselben zu glätten, bspw. zu polieren, oder es können daran besondere Beschichtungen oder Einlagen vorgesehen sein, bspw. aus Teflon oder einem anderen, glatten und gleichzeitig verschleißfesten Material.

Es hat sich als günstig erwiesen, dass wenigstens ein Gehäuseteil - vorzugsweise beide Gehäuseteile - eine topf- oder schalenförmige Gestalt aufweist (-en), insbesondere mit einer etwa ebenen Stirnseite und einer an deren äußerem Rand anschließenden, etwa zylindrischen Mantelfläche. Eine solche Gehäuseeinheit dient einerseits zum Anschluß an einem Fundament, Chassis oder sonstigem Anlagen- oder Maschinenteil, andererseits kann es wie bei einem Planetengetriebe bereits die Funktion eines Hohlrades übernehmen.

Andererseits kann zumindest ein Gehäuseteil eine deckelartige Gestalt aufweisen mit einer rundumlaufenden, gegenüber seinem äußeren Rand radial nach innen versetzten Schürze. Eine solche Geometrie eignet sich besonders für die Kombination mit einem zuvor beschriebenen, topf- oder schalenförmigen Gehäuseteil, und zwar derart, dass die Schürze in das topf- oder schalenförmige Gehäuseteil ganz oder teilweise eintaucht.

Ein bevorzugte Weiterbildung der Erfindung besteht darin, dass wenigstens eines der beiden gegeneinander verdrehbaren Gehäuseteile, vorzugsweise beide, eine ebene Stirnfläche zum Anschluß an ein Fundament, Chassis oder an ein sonstiges Maschinen- oder Anlagenteil aufweist (-en). Im Normalfall wird eine solche Anschlußfläche großflächig und reibsschlüssig an das anzuschließende Maschinen- oder Anlagenteil angepreßt, wodurch das Getriebe gleichzeitig gegenüber dem betreffenden Maschinen- oder Anlagenteil ausgerichtet wird.

Eine vorteilhafte Konstruktionsvorschrift sieht vor, dass eine oder vorzugsweise beide Anschlußflächen kranzförmig um die Rotationsachse verteilt angeordnete Bohrungen aufweist (-en), vorzugsweise mit Innengewinde versehene Sacklochbohrungen, zwecks Festlegung an einem Fundament, Chassis oder an einem sonstigen Maschinen- oder Anlagenteil. Darin eingreifende Schrauben spannen das betreffende Gehäuseteil fest gegen ein Fundament, Chassis, Maschinen- oder Anlagenteil.

Es hat sich bewährt, dass die Bohrungen, insbesondere Sacklochbohrungen, in beiden Anschlußflächen jeweils unterschiedliche radiale Abstände gegenüber der Rotationsachse aufweisen. Dieses Merkmal korrespondiert mit einer Ausführungsform mit einem topfförmigen Gehäuseteil und einem deckelförmigen Gehäuseteil mit radial nach innen versetzter Schürze. Solchenfalls können die Sacklochbohrungen in der Schürze einerseits und in der diese außen umschließenden Mantelfläche andererseits eingearbeitet sein.

Die beiden gegeneinander verdrehbaren Gehäuseteile sollten aneinander abgedichtet sein, bspw. mittels eines Dichtungsrings, der an einem Gehäuseteil festgelegt ist, und dessen Dichtlippe elastisch an das andere Gehäuseteil angepreßt wird.

Weitere Vorteile bietet eine Anordnung, wobei die Wälzlagerung zwei gegeneinander verdrehbare Ringe aufweist, zwischen denen die Wälzkörper abrollen. Zu diesem Zweck können in jedem Ring jeweils eine oder mehrere Laufbahn(en) vorgesehen sein zur Führung der darin abrollenden Wälzkörper. Diese Laufbahnen können direkt in den betreffenden Ring-Grundkörper eingearbeitet sein.

Eine solche Ausführungsform läßt sich dahingehend weiterbilden, dass die gegeneinander verdrehbaren Ringe jeweils einen Teil einer Gehäuseschale bilden. Dadurch sind eine Mehrzahl von Funktionen in einem Bauteil vereinigt-Anschluß bzw. Festlegung an einem Maschinen- oder Anlagenteil; Schutz vor Beschädigungen und eindringenden Fremdpartikeln; Zurückhaltung des eingefüllten Schmiermittels, vorzugsweise Fett, ggf. aber auch Öl; Versteifung des Gehäuses; Drehlagerung; innenverzahntes Hohlrad.

Es liegt im Rahmen der Erfindung, dass die gegeneinander verdrehbaren Ringe der Wälzlagerung mit je einer stirnseitigen Platte integriert oder verbunden sind, insbesondere verschraubt. Diese Platte dient vorzugsweise der Lagerung oder Führung der beweglichen Teile des Gehäuses.

Bevorzugt ist die Wälzlagerung zwischen den beiden, gegeneinander verdrehbaren Ringen oder Gehäuseteilen nach Art eines Radiallagers ausgebildet, vorzugsweise derart, dass sie Radialkräfte, Axialkräfte und Kippmomente aufnehmen kann.

Es hat sich bewährt, die Wälzlagerung zwischen den beiden, gegeneinander verdrehbaren Ringen oder Gehäuseteilen ein- oder mehrreihig auszubilden. Bei einer mehrreihigen Ausführungsform kann die Tragkraft bei ggf. verringertem Querschnitt der Wälzkörper erhöht werden.

Je nach Ausführungsform kann die Wälzlagerung zwischen den beiden, gegeneinander verdrehbaren Ringen oder Gehäuseteilen eine oder mehrere Kugelreihen und/oder Rollenlagerreihen aufweisen. Kugeln haben eine doppelt konvexe Oberfläche und sind zusammen mit dazu querschnittlich etwa komplementär gestalteten, doppelt konkav gewölbten Laufbahnen in der Lage, sowohl Radial- als auch Axialkräfte und Kippmomente aufzunehmen und von einem Ring auf den anderen zu übertragen. Bei Verwendung mehrerer Reihen von Wälzkörpern ist es aber auch möglich, die Wälzkörper einer oder mehrerer Reihen als Rollen auszubilden.

Wenigstens ein Gehäuseteil sollte eine geschlossene Stirnseite aufweisen, insbesondere ohne Durch- oder Austritt einer An- oder Abtriebswelle. Dadurch ist an dieser Stelle auch bei rauhem Betrieb das Eindringen von Fremdpartikeln in das Gehäuse ausgeschlossen.

Ein weiteres Merkmal der Erfindung ist, dass wenigstens einer der gegeneinander verdrehbaren Ringe oder Gehäuseteile eine Innvenverzahnung aufweist. Vorzugsweise können die gegeneinander verdrehbaren Ringe oder Gehäuseteile beide je eine Innenverzahnung aufweisen. Sie werden dadurch zu einem funktionellen Bestandteil des Getriebes. Vorzugsweise sind die Laufbahnen für die Wälzkörper der Wälzlagerung und die Innenverzahnungen des betreffenden Rings durch Bearbeitung oder Formgebung desselben Ring- bzw. Anschlußelement-Grundkörpers gebildet.

Im Rahmen einer dazu alternativen Ausführungsform ist an der Innenseite wenigstens eines der beiden gegeneinander verdrehbaren Ringe oder Gehäuseteile ein zusätzlicher Ring angesetzt, der eine Innenverzahnung aufweist. Dieser zusätzliche, innen verzahnte Ring kann bspw. mittels Schrauben an dem betreffenden, äußeren Ring festgelegt sein.

Bei diesen Ausführungen können die Innenverzahnungen an den beiden, gegeneinander verdrehbaren Ringen oder Gehäuseteilen identische oder nahezu identische Teilkreisdurchmesser aufweisen.

Die Erfindung zeichnet sich weiterhin dadurch aus, dass zwischen den Zähnezahlen $z_{H1}$, $z_{H2}$ der Innenverzahnungen der beiden Gehäuseteile ein Zähnezahlunterschied $\Delta z = |z_{H1} - z_{H2}|$ besteht:

$$\Delta z = |z_{H1} - z_{H2}| \geq 1.$$

Dieser Zähnezahlunterschied bewirkt eine geringe Relativverdrehung zwischen den beiden Ringen beim Umlauf der Planetenräder.

Vorzugsweise ist der Zähnezahlunterschied $\Delta z = |z_{H1} - z_{H2}|$ zwischen den Zähnezahlen $z_{H1}$, $Z_{H2}$ der Innenverzahnungen der beiden Gehäuseteile gleich oder kleiner als die Anzahl p der Planetenräder, insbesondere als die Anzahl der Planetenräder im Eingriff:

$$\Delta z = |z_{H1} - z_{H2}| \leq p.$$

Dabei ergeben sich besonders einfache Verhältnisse, wenn der Zähnezahlunterschied $\Delta z$ gleich der Anzahl p der Planetenräder ist:

$$\Delta z = |z_{H1} - z_{H2}| = p,$$

denn dann fluchten gerade im Bereich jedes Planetenrades die Zähne der Innenverzahnungen an beiden Ringen miteinander, und es können Planetenräder mit einer durchgehenden Verzahnung verwendet werden, die gleichzeitig in beide Innenverzahnungen eingreift. Andererseits sollte die Zähnezahldifferenz $\Delta z$ möglichst klein sein, damit die Getriebeüber- oder -untersetzung besonders groß wird. Aufgrund dieser Zusammenhänge ist besonders der oben angegebene Bereich $1 \leq \Delta z \leq p$ relevant.

Im allgemeinsten Fall sollten die Verzahnungen an den Innenseiten der beiden Gehäuseteile unterschiedliche Quotienten aus Teilkreisdurchmesser d und Teilung p aufweisen:

$$\Delta(d/\rho) = |d_{H1}/\rho_{H1} - d_{H2}/\rho_{H2}| > 0.$$

Sowohl durch eine unterschiedliche Zahnteilung bzw. unterschiedliche Module als auch durch unterschiedliche Teilkreisdurchmesser könnte eine Getriebeübersetzung erreicht werden. Daher können sich die Verzahnungen an den Innenseiten der beiden Gehäuseteile hinsichtlich ihres Teilkreisdurchmessers $d_{H1}$, $d_{H2}$ und/oder hinsichtlich ihrer Teilung $\rho_{H1}$, $\rho_{H2}$ insbesondere derart voneinander unterscheiden, dass die folgende Ungleichung erfüllt ist:

$$1/\pi \leq \Delta(d/\rho) = |d_{H1}/\rho_{H1} - d_{H2}/\rho_{H2}| \leq p/\pi.$$

Im Rahmen einer bevorzugten Ausführungsform weisen die Verzahnungen an den Innenseiten der beiden Gehäuseteile gleiche Teilkreisdurchmesser d auf, während sich ihre Teilungen $\rho_{H1}$, $\rho_{H2}$ voneinander unterscheiden:

$$\Delta d = d_{H1} - d_{H2} = 0;$$

$$\rho_{H1} / (p^{*}|z_{H1}-p|) \leq \Delta\rho = |\rho_{H1} - \rho_{H2}| \leq \rho_{H1} / |z_{H1}-1|.$$

Dabei sollte der Teilungsunterschied zwischen den beiden Innenverzahnungen nicht allzu groß werden, damit Plantenräder mit eine durchgehend konstanten Verzahnung in keiner von beiden Innenverzahnungen kämmen, sondern leichtgängig abrollen können.

Um eine Unwucht infolge umlaufender Planetenräder zu vermeiden, sollte die Anzahl n der Planetenräder zwei oder mehr betragen, vorzugsweise drei oder mehr, insbesondere vier oder mehr.

Aufgrund ähnlicher Erwägungen sollten zwei benachbarte von insgesamt n Planetenrädern um 360°/n gegeneinander versetzt sein, so dass sich auch dynamisch eine symmetrische Anordnung ergibt.

Erfindungsgemäß ist weiterhin vorgesehen, dass die Achsen aller Planetenräder parallel zueinander verlaufen. Dabei sind die Teilkreisdurchmesser der ineinandergreifenden Verzahnungen über jeweils die gesamte, aktive Länge eines Bauteils konstant und die Verzahnungen können leichtgängig ineinander abrollen.

Die Erfindung empfiehlt, dass alle Planetenräder durch zylindrische Mantelflächen begrenzt sind, in welche die Verzahnung eingearbeitet oder eingeformt ist. Hierbei handelt es sich um eine bewußte Abkehr von anderen Geometrien wie bspw. kegelförmigen oder konischen oder tonnenförmigen Zahnrädern, welche für die vorliegende Erfindung eher ungünstigere Eigenschaften haben.

Besondere Vorzüge ergeben sich dadurch, dass wenigstens ein Planetenrad eine zu seiner Rotationsachse konzentrische Ausnehmung, vorzugsweise Bohrung, insbesondere Durchgangsbohrung, aufweist. Dadurch kann u. a. Gewicht gespart werden.

Sofern der Innendurchmesser der Ausnehmung oder Bohrung, insbesondere Durchgangsbohrung, in einem Planetenrad derart bemessen ist, dass die Restwandstärke vom Zahnfuß bis zur inneren Bohrung gleich oder kleiner ist als das dreifache Zahnmodul des Planetenrades, vorzugsweise gleich oder kleiner als das zweifache Zahnmodul, insbesondere gleich oder kleiner als das einfache Zahnmodul, so hat ein derartiges, hülsenförmiges Planetenrad eine vergleichsweise hohe Elastizität und kann sich bei Bedarf leicht elastisch verformen.

Sofern - wie die Erfindung weiterhin vorsieht - ein Planetenrad in geringem Übermaß gefertigt ist, so ist es beim Eingriff in das Sonnenrad einerseits und in die Innenverzahnung andererseits gezwungen, sich leicht zu verformen, wodurch eine absolut spielfreie Lastübertragung möglich ist.

Die Konstruktion läßt sich weiter dadurch vereinfachen, dass wenigstens ein Planetenrad eine zwischen seinen beiden Stirnseiten durchgehende Verzahnung aufweist. Ein solches Planetenrad ist darauf angewiesen, dass in seinem Eingriffsbereich die Zähne der Innenverzahnungen beider Ringe ziemlich präzise miteinander fluchten.

Die Erfindung erfährt eine weitere Optimierung dadurch, dass wenigstens ein Planetenrad eine quer zu seiner Längsachse geteilte und in azimutaler Richtung gegeneinander verdrehte Verzahnung aufweist. Ein solches Planetenrad läßt sich auch an denjenigen Stellen verwenden, wo die Zähne der Innenverzahnungen beider Ringe nicht miteinander fluchten.

In Anbetracht der geringen Zähnezahlunterschiede zwischen den beiden Innenverzahnungen ist es möglich, dass die beiden, gegeneinander verdrehten Verzahnungen eines Planetenrades die selbe Zähnezahl aufweisen.

Planetenräder mit gegeneinander verdrehten Verzahnungen lassen sich dadurch realisieren, dass die beiden, gegeneinander verdrehten Verzahnungen eines Planetenrades auf getrennten Rädern angeordnet sind, welche auf eine gemeinsame Welle, insbesondere auf eine Vielkeilwelle, gesteckt sind. Wenn die Planetenräder an ihrer Innenseite eine zu der Vielkeilwelle komplementäre Oberflächenstruktur aufweisen, können sie formschlüssig auf jener aufgesteckt werden, wobei die einmal vorgegebene Drehstellung dauerhaft beibehalten wird. Eine Relativverdrehung der Verzahnungsabschnitte beider zusammengesteckter (Teil-) Räder kann einerseits dadurch erreicht werden, dass die innere Oberflächenstruktur beider Räder gegeneinander versetzt bzw. verdreht ist, oder dadurch, dass die Oberflächenstruktur eine feinere azimutale Teilung aufweist als die Verzahnung an der Außenseite, insbesondere ein Vielfaches davon, so dass die Räder in unterschiedlichen Drehstellungen auf eine gemeinsame Welle, insbesondere Vielkeilwelle aufsteckbar sind, wobei sich zwei "benachbarte" Drehstellungen um weniger als eine Zahnteilung an der Außenseite voneinander unterscheiden, bspw. um die Hälfte, ein Drittel oder ein Viertel der letzteren.

Die innere Reibung des Getriebes läßt sich minimieren, indem die Verzahnung des Sonnenrades eine kürzere axiale Erstreckung aufweist als die Planetenräder, insbesondere nur etwa die halbe axiale Erstreckung der letzteren; insbesondere bei Verwendung geteilter Planetenräder läßt sich dadurch ein Klemmen vermeiden.

Eine Möglichkeit zur Lagerung des Sonnenrades bietet sich an oder in wenigstens einer Stirnseite des Gehäuses.

Schließlich entspricht es der Lehre der Erfindung, dass das Sonnenrad einen durch wenigstens eine Stirnseite des Gehäuses hindurch zugänglichen Anschluß aufweist. An diesem Anschluß kann bevorzugt ein Antriebsmotor angekoppelt werden, der im Normalfall über keine Bremse verfügen muß, weil das erfindungsgemäße Getriebe im Allgemeinen selbsthemmend ist, d.h., selbst bei einer ziehenden Last zwischen den beiden Anschlußringen bewegt sich das Getriebe nicht, selbst wenn an dem dritten Anschluß kein Bremsmoment erzeugt wird.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1     einen Querschnitt durch ein erfindungsgemäßes Getriebe etwa entlang der Linie I - I in Fig. 2; sowie

Fig. 2      einen Schnitt durch die Fig. 1 entlang der Linie II - II.

Das erfindungsgemäße Getriebe 1 ist für einen rauen Betrieb und für extreme Beanspruchungen konzipiert und gleichzeitig dennoch sehr kompakt. Es weist ein etwa zylindrisches Gehäuse 2 auf, von dem sämtliche beweglichen Teile umschlossen sind.

Darüber hinaus handelt es sich hierbei nicht nur um ein reines Getriebe, sondern auch um eine Drehverbindung, die in der Lage ist, Axial- und Radialkräfte und Kippmomente zwischen zwei Anschlußelementen zu übertragen. Dies leistet eine im Bereich des äußeren Umfangs 3 des Gehäuses 2 angeordnete Wälzlagerung 4.

Diese Wälzlagerung 4 umfaßt zwei konzentrische Ringe 5, 6 in einem geringen gegenseitigen Abstand, so dass der zwischen den Ringen 5, 6 verbleibende Spalt 7 ein leichtgängiges Verdrehen zwischen den beiden Ringen 5, 6 erlaubt.

In dem Spalt 7 zwischen den beiden Ringen 5, 6 befinden sich mehrere, im vorliegenden Beispiel zwei Reihen von Wälzkörpern, insbesondere von Kugeln 8.

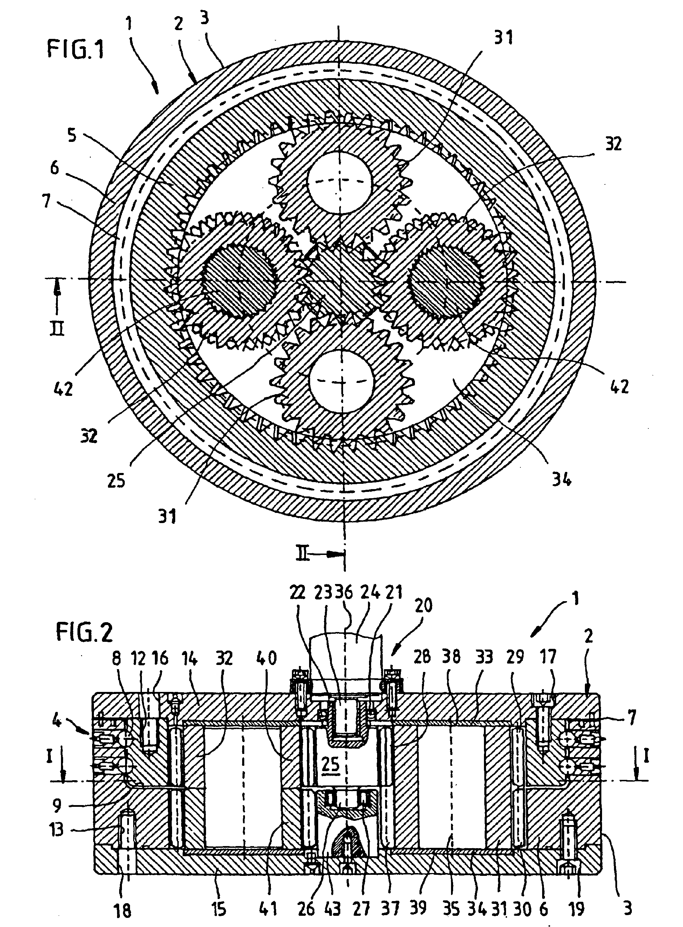

Wie Fig. 2 erkennen läßt, haben die beiden Ringe 5, 6 unterschiedliche Gestalt. Der Ring 5 radial innerhalb der Kugelreihen 8 hat einen etwa rechteckigen Querschnitt, während der Ring 6 radial außerhalb der Kugelreihen 8 einen etwa L-förmigen Querschnitt aufweist mit einer rundumlaufenden Auskehlung 9 an seiner Innenseite zur Aufnahme des inneren Rings 5, wobei der Querschnitt der Auskehlung 9 etwas größer ist als der Querschnitt des darin aufgenommenen Rings 5. Die Laufbahnen für die Kugeln 8 sind in die äußere Mantelfläche 10 des Innenrings 5 einerseits und in die innere Mantelfläche 11 der etwa achsparallelen "Schürze" am Außenring 6 eingearbeitet bzw. eingeformt. Aufgrund dieser Anordnung hat die Wälzlagerung 4 die Eigenschaften eines Radiallagers, welches Radial- und Axialkräfte aufnehmen und übertragen kann sowie Kippmomente.

In den einander abgewandten, ebenen Stirnseiten der beiden Ringe 5, 6 sind mehrere Bohrungen 12, 13 mit Innengewinde, insbesondere Sacklochbohrungen, kranzförmig verteilt angeordnet.

Einige dieser Bohrungen 12, 13 dienen zur Verschraubung des betreffenden Rings 5, 6 mit je einer stirnseitigen Gehäuseabschlußplatte 14, 15. Jede der beiden Gehäuseabschlußplatten 14, 15 weist mit den Bohrungen 12, 13 des betreffenden Rings 5, 6 fluchtende Bohrungen 16, 17, 18, 19 auf. Hierbei gibt es jeweils Bohrungen 16, 17, 18, 19 mit unterschiedlichen Querschnitten: Während die Bohrungen 17, 19 einen stufigen Verlauf haben, der sich zu dem betreffenden Ring 5, 6 hin verjüngt und zur Aufnahme von Gehäuseschrauben 20, 21 dient, haben die übrigen Bohrungen 16, 18 einen geraden Verlauf und dienen als Durchgänge für Schrauben zwecks der Verbindung eines Gehäuseteils 5, 14 bzw. 6, 15 mit je einem nicht dargestellten Maschinen- oder Anlagenteil. Da diese Durchgangsbohrungen 16, 18 kein Gewinde aufweisen, nehmen sie auch keine Kräfte auf; die kraftschlüssige Verbindung kommt in Wahrheit mit den Ringen 5, 6 zustande, die mit Schrauben od. dgl. an einem Maschinen- oder Anlagenteil festgespannt werden und dabei die betreffende Gehäuseabschlußplatte 14, 15 dazwischen einklemmen.

Somit bildet jeweils ein Ring 5, 6 samt der daran festgelegten Gehäuseabschlußplatte 14, 15 jeweils eine von zwei Gehäusebauteilen, welche gegeneinander verdrehbar sind. Im Allgemeinen wird eines von diesen an einem Fundament, Chassis od. dgl. angeschlossen, der andere an einem demgegenüber verdrehbaren Maschinen- oder Anlagenteil. Damit ist letzterem aufgrund der Wälzlagerung 4 eine bestimmte Position zugewiesen, und der einzige verbleibende Freiheitsgrad ist eine Drehung um die Achse der Wälzlagerung 4.

Um die Drehposition vorgeben zu können, ist ein dritter Anschluß 20 vorgesehen. Dieser ist konzentrisch zu den Ringen 5, 6 angeordnet und befindet sich vorzugsweise im Zentrum einer Gehäuseabdeckplatte 14, 15, im dargestellten Beispiel im Zentrum der oberen Gehäuseabdeckplatte 14. Dort ist mittels eines in dieser Platte 14 angeordneten Wälzlagers, insbesondere Kugellagers 21, eine Buchse 22 konzentrisch zur Rotationsachse der Wälzlagerung 4 verdrehbar gelagert. In diese Buchse kann bspw. eine Abtriebswelle 23 eines Antriebsmotors 24 eingreifen, der an der Gehäuseabdeckplatte 14 angeflanscht werden kann, wie in Fig. 2 dargestellt. Eine Nut-Feder-Verbindung zwischen der Motorabtriebswelle 23 und der Buchse 22 sorgt für eine formschlüssige und damit schlupffreie Kraftübertragung von dem Motor 24 auf die Buchse 22.

Die Buchse 22 setzt sich innerhalb des Gehäuses 2 fort in Form eines verzahnten Sonnenrades 25. Die axiale Erstreckung des Sonnenrades 25 ist kürzer als der Abstand zwischen den beiden Gehäuseabschlußplatten 14, 15, bspw. etwa halb so groß. Zur Abstützung des Sonnenrades kann dieses an seiner der Buchse gegenüberliegenden Stirnseite einen bspw. angeformten Zapfen 26 aufweisen, der wiederum - bspw. mittels eines weiteren Wälzlagers 27 - an einem mit der gegenüberliegenden Gehäuseabschlußplatte 15 verbundenen, bspw. verschraubten, insbesondere zylindrischen oder etwa topfförmigen Lagerkörper 43 verdrehbar gehalten ist.

Das Sonnenrad 25 weist vorzugsweise eine gerade Verzahnung 28 mit $z_S$ Zähnen auf. Eine Innenverzahnung 29 mit dem selben Modul und derselben Zahnform ist an der Innenseite zumindest desjenigen Rings 5 angeordnet, dessen innenliegende Mantelfläche sich auf der selben Höhe wie die Verzahnung 28 des Sonnenrades befindet; diese Verzahnung 29 umfaßt $z_{H1}$ Zähne.

Auch an der innenliegenden Mantelfläche des anderen Rings 6 ist eine Innenverzahnung 30 angeordnet. Diese unterscheidet sich von der Verzahnung 29 an dem anderen Ring 5 insbesondere durch die Anzahl $z_{H2}$ der Zähne:

$$z_{H1} \neq z_{H2},$$

wobei jedoch die Zahndifferenz $\Delta z = |z_{H1} - z_{H2}|$ relativ gering ist, im Idealfall nur 1 beträgt.

In dem etwa ringförmigen Raum zwischen den beiden Ringen 5, 6, den beiden Gehäuseabsschlußplatten 14, 15 und dem Sonnenrad 25 laufen mehrere Planetenräder 31, 32 um, insbesondere in äquidistanten Abständen über den Umfang verteilt.

Die Planetenräder 31, 32 sind ohne jeglichen Planetenradträger bzw. Steg gelagert und können sich daher in achsparalleler Richtung von einer Gehäuseabschlußplatte 14 bis zur anderen 15 erstrecken; allerdings kann dazwischen je eine Gleitschicht 33, 34 angeordnet sein, bspw. aus einem glatten, aber widerstandsfähigen und damit verschleißfesten Material wie bspw. Teflon. Diese Gleitschichten 33, 34 dienen sodann als Führungsbahnen für die Planetenräder 31, 32 und stellen sicher, dass deren Längsachsen stets 35 parallel zu der Rotationsachse 36 des Getriebegehäuses 2 ausgerichtet sind. Die Planetenräder 31, 32 sind derart bemessen, dass sie mit leichtem Spiel oder gar spielfrei, zwischen dem Sonnenrad 25 und der diesem entsprechenden Innenverzahnung 29 abrollen. Sie haben den selben Zahnmodul wie das Sonnenrad 25 und die Innenverzahnung 29. Aufgrund dieser Gesamtanordnung laufen die Planetenräder bei einer Drehung des Sonnenrades 25 um dieses um und wälzen sich dabei entlang der Innenverzahnung 29 ab.

Dabei stehen sie mit der weiteren Innenverzahnung 30 an dem zweiten Ring 6 in kämmendem Eingriff, wobei die Planetenräder 31, 32 in ihrem mit der Innenverzahnung 30 kämmenden Bereich die selbe Zähnezahl $z_P$ aufweisen wie in ihrem mit der Innenverzahnung 29 an dem ersten Ring 5 kämmenden Bereich. Nachdem sie sich einmal um den Teilkreis-Umfang der Innenverzahnung 29 des (bspw. an einem Fundament oder Chassis) festgelegten Rings 5 bzw. entlang von dessen $z_{H1}$ Zähnen abgewälzt haben, haben sie auch an dem zweiten Ring 6 $z_{H1}$ Zähne überrollt. Da dieser jedoch $z_{H2}$ Zähne aufweist, muß er sich in diesem Zeitraum um $\Delta z = |z_{H1} - z_{H2}|$ Zähne gegenüber dem ersten Ring 5 verdrehen, also um den geringen Zähnezahlunterschied. Daraus resultiert eine extrem starke Untersetzung von dem Sonnenrad 25 bzw. einem darin eingreifenden Antrieb 24 zu dem als Abtrieb dienenden Ring 6 (oder Ring 5, falls Ring 6 an einem Fundament od. dgl. festgelegt ist) von bspw. ca. 500 : 1 bis etwa 1.000 : 1. Diese starke Untersetzung wiederum hat den oftmals erwünschten Nebeneffekt, dass das Getriebe selbsthemmend ist, d.h., eine an einem Ring 5, 6 ziehende bzw. drehende Last ist nicht in der Lage, den ungebremsten Motor 24 in Drehbewegung zu versetzen.

Wie der Zeichnung zu entnehmen ist, gibt es im Allgemeinen zwei Arten von Planetenrädern: Die einen Planetenräder 31 sind ungeteilt (vgl. Fig. 2 rechts), und ihre Verzahnung 37 erstreckt sich zwischen beiden Stirnseiten 38, 39 durchgehend, ohne jede Stufe. Daneben kann es Planetenräder 32 geben (vgl. Fig. 2 links), welche in einen oberen Abschnitt 40 und in einen unteren Abschnitt 41 unterteilt sind. Zwar sind beide Abschnitte 40, 41 verzahnt, insbesondere auch mit demselben Modul bzw. derselben Zähnezahl $z_P$ und - form; jedoch fluchten die Zähne der beiden Abschnitte 40, 41 nicht miteinander, sondern sind um ein geringes Maß gegeneinander verdreht. Die Trennung zwischen den beiden Abschnitten 40, 41 befindet sich auf Höhe der Mündung des Spalts 7 zwischen den beiden Innenverzahnungen 29, 30, so dass jeder Abschnitt 40, 41 nur mit genau einer Innenverzahnung 29 oder 30 kämmt, um ein Klemmen zu verhindern. Die beiden Abschnitte 40, 41 sind jedoch drehfest miteinander verbunden, was bspw. dadurch geschehen kann, dass jeder Verzahnungsabschnitt 40, 41 ringförmig ausgebildet ist mit einer feiner Verzahnung auf der Innenseite, welche eine mehrfache, bspw. die doppelte Zähnezahl $z_{Pi}$ aufweist wie die Zähne $z_P$ der Außenverzahnung an einem der Abschnitte 40, 41:

$$z_{Pi} = n * z_P, \text{ mit } k = 2, 3, 4 \ldots$$

Beide Verzahnungsabschnitte 40, 41 sind sodann auf eine gemeinsam Vielkeilwelle 42 od. dgl. verdrehfest aufgesteckt, jedoch gegeneinander um einen oder mehrere Zähne, allerdings um weniger als k Zähne, gegeneinander verdreht, so dass die Zähne der Verzahnungsbereiche 40, 41 nicht miteinander fluchten.

Geteilte Planetenräder 32 sind insbesondere dann erforderlich, wenn die Anzahl n der Planetenräder 31, 32 nicht mit der Zähnezahldifferenz $\Delta z = |z_{H1} - z_{H2}|$ der Innenverzahnungen 29, 30 übereinstimmt.

In dem Fall, dass n = $\Delta z$, kann auf geteilte Planetenräder 32 verzichtet werden. Insbesondere bei einer derartigen Ausführungsform besteht die Möglichkeit, die ungeteilten Planetenräder 31 als dünne Hülsen auszubilden, wobei die Mantelstärke in der Größenordnung etwa einer Zahnbreite liegt. Dadurch erhalten die Planetenräder 31 eine gewisse Elastizität und können mit geringem Übermaß gefertigt werden, so dass sie unter Spannung in den Getriebehohlraum einzusetzen sind. Infolge dieser Spannung sind alle Planetenräder 31 gleichzeitig in Eingriff, und das Getriebe hat im Idealfall vollkommene Spielfreiheit.

Bezugszeichenliste

| | | | |
|---|---|---|---|
| 1 | Getriebe | 26 | Zapfen |

(fortgesetzt)

| | | | |
|---|---|---|---|
| 2 | Gehäuse | 27 | Wälzlager |
| 3 | Umfang | 28 | Verzahnung |
| 4 | Wälzlagerung | 29 | Innenverzahnung |
| 5 | Innenring | 30 | Innenverzahnung |
| 6 | Außenring | 31 | Planetenrad |
| 7 | Spalt | 32 | Planetenrad |
| 8 | Kugeln | 33 | Gleitschicht |
| 9 | Auskehlung | 34 | Gleitschicht |
| 10 | äußere Mantelfläche | 35 | Längsachse |
| 11 | innere Mantelfläche | 36 | Rotationsachse |
| 12 | Bohrung | 37 | Verzahnung |
| 13 | Bohrung | 38 | Stirnseite |
| 14 | Gehäuseabschlußplatte | 39 | Stirnseite |
| 15 | Gehäuseabschlußplatte | 40 | Abschnitt |
| 16 | Bohrung | 41 | Abschnitt |
| 17 | Bohrung | 42 | Vielkeilwelle |
| 18 | Bohrung | 43 | Lagerkörper |
| 19 | Bohrung | | |
| 20 | Anschluß | | |
| 21 | Kugellager | | |
| 22 | Buchse | | |
| 23 | Abtriebswelle | | |
| 24 | Antriebsmotor | | |
| 25 | Sonnenrad | | |

**Patentansprüche**

**1.** Wolfrom'sches, stegloses Umlaufrädergetriebe (1), umfassend zwei zueinander koaxiale, gegeneinander verdrehbare Gehäuseteile (5,14;6,15) mit je einer Innenverzahnung (29;30) an der betreffenden Innenseite, ein verzahntes Sonnenrad (25) mit einem durch wenigstens eine Stirnseite (14) des Gehäuses (2) hindurch zugänglichen Anschluß für einen Antriebsmotor (24), sowie mehrere verzahnte Planetenräder (31,32), welche zwischen dem Sonnenrad (25) und den Innenverzahnungen (29;30) abrollen und fliegend gelagert sind, d.h. ohne einen Planetenradträger, sondern indem ihre Stirnseiten (38,39) zwischen zwei ebenen, zueinander parallelen, ringförmigen Gleitflächen entlanggleiten, welche an den Innenseiten der Stirnflächen (14;16) der beiden Gehäuseteile (5,14;6,15) angeordnet sind, **gekennzeichnet durch** eine Wälzlagerung (4) zwischen den beiden Gehäuseteilen (5,14;6,15), deren Wälzkörper (8) auf Bahnen umlaufen, welche sich

a) radial außerhalb wenigstens einer Innenverzahnung (29,30) befinden, sowie
b) auf einer axialen Höhe zwischen den beiden Gleitflächen des Gehäuses (2;5,14;6,15) zur Führung der Planetenräder (31,32), wobei das Sonnenrad (25)
c) eine axiale Erstreckung aufweist, die kürzer ist als der Abstand zwischen den beiden Gehäuseabschlußplatten (14, 15),
d) und an seiner dem Anschluß für einen Antriebsmotor (24) gegenüber liegenden Stirnseite mittels einer Wälzlagerung (27) an einem Lagerkörper (43) abgestützt ist, der mit der gegenüber liegenden Gehäuseabschlußplatte (15) verbunden ist.

**2.** Umlaufrädergetriebe (1) nach Anspruch 1, **dadurch gekennzeichnet, dass** wenigstens ein Gehäuseteil (5,14;6,15) eine topf- oder schalenförmige Gestalt aufweist, oder eine deckelartige Gestalt mit einer rundum laufenden, gegenüber seinem Rand (3) radial nach innen versetzten Schürze (5).

**3.** Umlaufrädergetriebe (1) nach einem der Ansprüche 1 oder 2, **dadurch gekennzeichnet, dass** wenigstens eines der beiden gegeneinander verdrehbaren Gehäuseteile (5,14;6,15), vorzugsweise beide, eine ebene Stirnfläche (14; 15) zum Anschluß an ein Fundament, Chassis oder an ein sonstiges Maschinen- oder Anlagenteil aufweist (-en), wovon gegebenenfalls eine oder vorzugsweise beide Anschlußflächen (14;15) kranzförmig um die Rotationsachse (36) verteilt angeordnete Bohrungen (12;13) aufweist (-en), vorzugsweise mit Innengewinde versehene Sacklochbohrungen, zwecks Festlegung an einem Fundament, Chassis oder an einem sonstigen Maschinen- oder Anlagenteil.

**4.** Umlaufrädergetriebe (1) nach einem der vorhergehenden Ansprüche, **dadurch gekennzeichnet, dass** die Wälzlagerung (4) zwei gegeneinander verdrehbare Ringe (5,6) aufweist, zwischen denen die Wälzkörper (4) abrollen, wobei die gegeneinander verdrehbaren Ringe (5,6) der Wälzlagerung (4) vorzugsweise jeweils einen Teil einer Gehäuseschale (5,14;6,15) bilden, und/oder mit je einer stirnseitigen Platte (14,15) integriert oder verbunden sind, insbesondere verschraubt.

**5.** Umlaufrädergetriebe (1) nach einem der vorhergehenden Ansprüche, **dadurch gekennzeichnet, dass** die Wälzlagerung (4) zwischen den beiden, gegeneinander verdrehbaren Ringen (5,6) oder Gehäuseteilen (5,14;6,15) nach Art eines Radiallagers ausgebildet ist, und/oder eine oder mehrere Kugel- und/oder Rollenlagerreihen aufweist.

**6.** Umlaufrädergetriebe (1) nach einem der vorhergehenden Ansprüche, **dadurch gekennzeichnet, dass** wenigstens einer der gegeneinander verdrehbaren Ringe (5,6) oder Gehäuseteile (5,14;6,15), vorzugsweise beide, eine Innenverzahnung (29,30) aufweist (-en).

**7.** Umlaufrädergetriebe (1) nach einem der vorhergehenden Ansprüche, **dadurch gekennzeichnet, dass** an der Innenseite wenigstens eines der beiden gegeneinander verdrehbaren Ringe (5,6) oder Gehäuseteile (5,14;6,15) ein zusätzlicher Ring angesetzt ist, der eine Innenverzahnung (29,30) aufweist.

**8.** Umlaufrädergetriebe (1) nach einem der Ansprüche 6 oder 7, **dadurch gekennzeichnet, dass** die Innenverzahnungen (29,30) an den beiden, gegeneinander verdrehbaren Ringen (5,6) oder Gehäuseteilen (5,14;6,15) identische oder nahezu identische Teilkreisdurchmesser aufweisen.

**9.** Umlaufrädergetriebe (1) nach einem der Ansprüche 6 bis 8, **dadurch gekennzeichnet, dass** zwischen den Zähnezahlen $z_{H1}$, $z_{H2}$ der Innenverzahnungen (29,30) der beiden Gehäuseteile (5,14;6,15) ein Zähnezahlunterschied $\Delta z = |z_{H1} - z_{H2}|$ besteht:

$$\Delta z = |z_{H1} - z_{H2}| \geq 1.$$

**10.** Umlaufrädergetriebe (1) nach Anspruch 9, **dadurch gekennzeichnet, dass** der Zähnezahlunterschied $\Delta z = |z_{H1} - z_{H2}|$ zwischen den Zähnezahlen $z_{H1}$, $z_{H2}$ der Innenverzahnungen (29,30) der beiden Gehäuseteile (5,14;6,15) gleich oder kleiner ist als die Anzahl p der Planetenräder (31,32), insbesondere als die Anzahl der Planetenräder (31,32) im Eingriff:

$$\Delta z = |z_{H1} - z_{H2}| \leq p.$$

**11.** Umlaufrädergetriebe (1) nach einem der Ansprüche 6 bis 10, **dadurch gekennzeichnet, dass** die Verzahnungen (29,30) an den Innenseiten der beiden Gehäuseteile (5,14;6,15) unterschiedliche Quotienten aus Teilkreisdurchmesser d und Teilung p aufweisen:

$$\Delta(d/p) = |d_{H1}/\rho_{H1} - d_{H2}/\rho_{H2}| > 0.$$

**12.** Umlaufrädergetriebe (1) nach einem der Ansprüche 6 bis 11, **dadurch gekennzeichnet, dass** die Verzahnungen (29,30) an den Innenseiten der beiden Gehäuseteile (5,14;6,15) sich hinsichtlich ihres Teilkreisdurchmessers $d_{H1}$, $d_{H2}$ und/oder hinsichtlich ihrer Teilung $\rho_{H1}$, $\rho_{H2}$ voneinander unterscheiden, so dass die folgende Ungleichung erfüllt ist:

$$1/\pi \leq \Delta(d/p) = |d_{H1}/\rho_{H1} - d_{H2}/\rho_{H2}| \leq p/\pi.$$

**9**

**13.** Umlaufrädergetriebe (1) nach einem der Ansprüche 6 bis 12, **dadurch gekennzeichnet, dass** die Verzahnungen (29,30) an den Innenseiten der beiden Gehäuseteile (5,14;6,15) gleiche Teilkreisdurchmesser d aufweisen, während sich ihre Teilungen $\rho_{H1}$, $\rho_{H2}$ voneinander unterscheiden:

$$\Delta d = d_{H1} - d_{H2} = 0;$$

$$\rho_{H1} / (p^*|z_{H1}-p|) \leq \Delta\rho = |\rho_{H1} - \rho_{H2}| \leq \rho_{H1} / |z_{H1}-1|.$$

**14.** Umlaufrädergetriebe (1) nach einem der vorhergehenden Ansprüche, **dadurch gekennzeichnet, dass** wenigstens ein Planetenrad (31,32) eine zu seiner Längsachse (35) konzentrische Ausnehmung, vorzugsweise Bohrung, insbesondere Durchgangsbohrung, aufweist, deren Innendurchmesser vorzugsweise derart bemessen ist, dass die Restwandstärke vom Zahnfuß bis zur inneren Bohrung gleich oder kleiner ist als das dreifache Zahnmodul des Planetenrades (31,32), vorzugsweise gleich oder kleiner als das zweifache Zahnmodul, insbesondere gleich oder kleiner als das einfache Zahnmodul.

**15.** Umlaufrädergetriebe (1) nach einem der vorhergehenden Ansprüche, **dadurch gekennzeichnet, dass** wenigstens ein Planetenrad (32) eine quer zu seiner Längsachse (35) geteilte Verzahnung mit in azimutaler Richtung gegeneinander verdrehten Verzahnungsabschnitte (40,41) aufweist, wobei die beiden, gegeneinander verdrehten Verzahnungsabschnitte (40,41) eines Planetenrades (32) vorzugsweise die selbe Zähnezahl $z_P$ aufweisen, und/oder auf getrennten Rädern angeordnet sind, welche auf eine gemeinsame Welle, insbesondere auf eine Vielkeilwelle (42), gesteckt sind.

## Claims

**1.** Wolfrom epicyclic gear set (1) without planet spider, comprising two to each other coaxial, against each other rotatable casing sections (5,14; 6,15), each with internal toothing (29;30) at the respective inner side, one sun gear (25) with a connection for a drive motor (24) accessible through at least one face (14) of the casing (2) as well as several toothed planetary gears (31,32), which are rolling around between sun gear (25) and the internal tooth systems (29;30) and are flying, i.e. without a planetary gear carrier, but in such way that their faces (38,39) are sliding along between two plane, to each other parallel ring-shaped sliding surfaces that are arranged at the internal sides of the two faces (14;16) of both casing sections (5,14; 6,15), **characterized by** an antifriction bearing system (4) between both casing sections (5,14; 6,15), whereby their rolling elements (8) rotate around on paths, which are

    a) located radial outside of at least one of the internal tooth systems (29;30) as well as
    b) at one axial level between both sliding surfaces of the casing (2;5, 14;6, 15) for guiding the planetary gears (31,32), in which the sun gear (25)
    c) exhibits an axial extension, which is shorter than the distance between both casing endplates (14, 15),
    d) and is supported by an antifriction bearing system (27) at a bearing body (43), which is located at the face opposite to the connection for a drive motor (24) and which is connected to the opposite casing endplate (15).

**2.** Epicyclic gear set (1) according to claim 1, **characterized by** the fact that at least one casing section (5,14; 6,15), exhibits a pot or bowl-like shape, or a cap-type shape with a circumferential skirt (5), radially displaced towards the inside against its rim (3).

**3.** Epicyclic gear set (1) according to one of the claims 1 or 2, **characterized by** the fact that at least one of the two against each other rotatable casing sections (5,14; 6,15), preferably both, exhibit(s) a planar face surface (14;15) for the connection to a foundation, a chassis, or to any other part of machinery or equipment, of which - as the case may be - one or preferably both attachment surfaces (14;15) exhibit(s) drilled holes (12;13), arranged evenly distributed around the rotational axis (36), preferably blind holes provided with internal thread for the purpose of fixing to a foundation, a chassis, or to any other part of machinery or equipment.

**4.** Epicyclic gear set (1) according to one of the foregoing claims, **characterized by** the fact that the antifriction bearing system (4) exhibits two against each other rotatable rings (5,6) in between the same the rolling elements (4) are rolling, in which the against each other rotatable rings (5,6) of the antifriction bearing system (4) preferably each are forming an integral part of the casing shell (5,14; 6,15), and/or are integrated in or connected to a front-side plate (14,15), particularly screw-fastened.

5. Epicyclic gear set (1) according to one of the foregoing claims, **characterized by** the fact that the antifriction bearing system (4) between both against each other rotatable rings (5,6) or casing sections (5,14; 6,15) is designed in the style of a radial bearing, and/or exhibits one or several ball bearing and/or roller bearing rows.

6. Epicyclic gear set (1) according to one of the foregoing claims, **characterized by** the fact that at least one of the against each other rotatable rings (5,6) or casing sections (5,14; 6,15), preferably both, exhibit(s) internal toothing (29,30).

7. Epicyclic gear set (1) according to one of the foregoing claims, **characterized by** the fact that at the inside at least one of the two against each other rotatable rings (5,6) or casing sections (5,14; 6,15) an additional ring is attached that exhibits internal toothing (29,30).

8. Epicyclic gear set (1) according to one of the claims 6 or 7, **characterized by** the fact that the internal tooth systems (29;30) exhibit identical or almost identical pitch circle diameters at both against each other rotatable rings (5,6) or casing sections (5,14; 6,15).

9. Epicyclic gear set (1) according to one of the claims 6 through 8, **characterized by** the fact that between the numbers of teeth $z_{H1}$, $z_{H2}$ of the internal toothing (29,30) of both casing sections (5,14; 6,15) a difference in the numbers of teeth $\Delta z = |z_{H1} - z_{H2}|$ exists:

$$\Delta z = |z_{H1} - z_{H2}| \geq 1.$$

.

10. Epicyclic gear set (1) according to claim 9, **characterized by** the fact that difference in the numbers of teeth $\Delta z = |z_{H1} - z_{H2}|$ between the numbers of teeth $z_{H1}$, $z_{H2}$ of the internal toothing (29,30) of both casing sections (5,14; 6,15) is equal or less than the number p of the planet gears (31,32), in particular the number of planet gears (31,32) in mesh:

$$\Delta z = |z_{H1} - z_{H2}| \leq p.$$

11. Epicyclic gear set (1) according to one of the claims 6 through 10, **characterized by** the fact that the tooth systems (29,30) at the internal sides of both casing sections (5,14; 6,15) exhibit differing quotients of pitch circle diameter d and pitch p:

$$\Delta(d/p) = |d_{H1}/p_{H1} - d_{H2}/p_{H2}| > 0$$

12. Epicyclic gear set (1) according to one of the claims 6 through 11, **characterized by** the fact that the tooth systems (29,30) at the internal sides of both casing sections (5,14; 6,15) differ from each other regarding their pitch circle diameter $d_{H1}$, $d_{H2}$ and/or regarding their pitch $p_{H1}$, $p_{H2}$ so that the following inequality is fulfilled:

$$1/\pi \leq \Delta(d/p) = |d_{H1}//p_{H1} - d_{H2}/p_{H2}| \leq p/\pi$$

13. Epicyclic gear set (1) according to one of the claims 6 through 12, **characterized by** the fact that the tooth systems (29,30) at the internal sides of both casing sections (5,14; 6,15) exhibit equal pitch circle diameters d, while their pitches $p_{H1}$, $p_{H2}$ differ from each other:

$$\Delta d = d_{H1} - d_{H2} = 0;$$

$$p_{H1} / (p^*|z_{H1} - p|) \leq \Delta p = |p_{H1} - p_{H2}| \leq p_{H1} / |z_{H1} - 1|.$$

**14.** Epicyclic gear set (1) according to one of the foregoing claims, **characterized by** the fact that at least one planet gear (31,32) exhibits a recess concentric to its longitudinal axis (35), preferably a drilled hole, in particular a through-hole, where the inner diameters of which are preferably dimensioned so that the remaining wall thickness from tooth base to the inner bore is equal or less than triple the gear tooth module of the planet gear (31,32), preferably equal or less than double the gear tooth module, in particular equal or less than one times the gear tooth module.

**15.** Epicyclic gear set (1) according to one of the foregoing claims, **characterized by** the fact that at least one planet gear (32) exhibits a transverse to its longitudinal axis (35) divided tooth system with in azimuthal direction against each other turned gearing sections (40,41), where both against each other turned gearing sections (40,41) of one planet gear (32) preferably exhibits the same number of teeth $z_p$, and/or are arranged on separate wheels, which are stuck onto a common shaft, in particular a spline shaft (42).

**Revendications**

**1.** Train d'engrenage planétaire sans support (1) de type Wolfrom, comprenant deux éléments de carter (5, 14 ; 6, 15) coaxiaux l'un par rapport à l'autre, pouvant tourner en opposition et présentant chacun une denture intérieure (29 ; 30) sur la face intérieure correspondante, une roue solaire dentée (25) avec une connexion accessible par au moins une partie frontale (14) du carter (2) pour un moteur d'entraînement (24), ainsi que plusieurs satellites dentés (31, 32) qui roulent entre la roue solaire (25) et les dentures intérieures (29 ; 30) et sont disposés en porte-à-faux, c'est-à-dire sans support satellite, mais en ce que leur parties frontales (38, 39) se déplacent sur toute la longueur entre deux surfaces de glissement annulaires, planes, parallèles les unes par rapport aux autres, qui sont disposées sur les parties intérieures des faces frontales (14 ; 16) des deux éléments de carter (5, 14 ; 6, 15), **caractérisé par** un palier à roulement (4) entre les deux éléments de carter (5, 14 ; 6, 15) dont les corps de roulement (8) tournent sur des chemins qui sont situés

> a) radialement à l'extérieur d'au moins une denture intérieure (29, 30), ainsi que
> b) sur une hauteur axiale entre les deux surfaces de glissement du carter (2 ; 5, 14 ; 6, 15) pour le guidage des satellites (31, 32),
> ladite roue solaire (25)
> c) présente une extension axiale qui est plus courte que l'espacement entre les deux plaques de fermeture du carter (14, 15),
> d) et dont la partie frontale opposée à la connexion pour un moteur d'entraînement (24) est appuyée au moyen d'un palier à roulement (27) sur un corps de roulement (43) qui est relié à la plaque de fermeture du carter (15) opposée.

**2.** Train d'engrenage planétaire (1) selon la revendication 1, **caractérisé en ce qu'**au moins un élément de carter (5, 14 ; 6 15) présente une forme de pot ou de cuvette, ou une forme de type couvercle avec une jupe (5) faisant tout le tour de la circonférence, décalée radialement vers l'intérieur par rapport à son bord (3).

**3.** Train d'engrenage planétaire (1) selon l'une des revendications 1 ou 2, **caractérisé en ce qu'**au moins l'un des deux éléments de carter (5, 14 ; 6, 15) pouvant tourner en opposition, de préférence tous les deux, présente(nt) une face frontale (14 ;15) plane pour le raccordement à une embase, un châssis ou à une autre partie de machine ou d'installation dont, le cas échéant, une ou de préférence deux surfaces de raccordement (14 ; 15) présente(nt) des trous (12 ; 13) disposés et répartis en forme de couronne autour de l'axe de rotation (36), de préférence des trous borgnes pourvus d'un filetage intérieur, à des fins de fixation à une embase, un châssis ou à une autre partie de machine ou d'installation.

**4.** Train d'engrenage planétaire (1) selon l'une des revendications précédentes, **caractérisé en ce que** le palier à roulement (4) présente deux anneaux (5, 6) pouvant tourner en opposition, entre lesquels roulent les corps de roulement (4), lesdits anneaux (5, 6) pouvant tourner en opposition du palier de roulement (4) forment de préférence respectivement une partie d'une cuvette de carter (5, 14 ; 6, 15), et/ou sont intégrés ou reliés, en particulier vissés, respectivement à une plaque (14, 15) frontale.

**5.** Train d'engrenage planétaire (1) selon l'une des revendications précédentes, **caractérisé en ce que** le palier à roulement (4) est réalisé sous forme d'un palier radial entre les deux anneaux (5, 6) ou les éléments de carter (5, 14 ; 6, 15) pouvant tourner en opposition, et/ou présente une ou plusieurs rangées de roulements à billes et/ou de roulements à rouleaux.

6. Train d'engrenage planétaire (1) selon l'une des revendications précédentes, **caractérisé en ce qu'**au moins l'un des anneaux (5, 6) ou des éléments de carter (5, 14 ; 6, 15) pouvant tourner en opposition, de préférence tous les deux, présente(nt) une denture intérieure (29, 30).

7. Train d'engrenage planétaire (1) selon l'une des revendications précédentes, **caractérisé en ce que** sur la face intérieure d'au moins l'un des anneaux (5, 6) ou éléments de carter (5, 14 ; 6, 15) pouvant tourner en opposition est ajouté un anneau supplémentaire qui présente une denture intérieure (29, 30).

8. Train d'engrenage planétaire (1) selon l'une des revendications 6 ou 7, **caractérisé en ce que** les dentures intérieures (29, 30) présentent au niveau des deux anneaux (5, 6) ou éléments de carter (5, 14 ; 6, 15) pouvant tourner en opposition des diamètres primitifs de référence identiques ou pratiquement identiques.

9. Train d'engrenage planétaire (1) selon l'une des revendications 6 à 8, **caractérisé en ce qu'**entre les nombres de dents $Z_{H1}$, $Z_{H2}$ des dentures intérieures (29, 30) des deux éléments de carter (5, 14 ; 6, 15) il existe une différence de nombre de dents $\Delta z = |Z_{H1} - Z_{H2}|$ :

$$\Delta z = \left| Z_{H1} - Z_{H2} \right| \geq 1.$$

10. Train d'engrenage planétaire (1) selon la revendication 9, **caractérisé en ce que** la différence de nombre de dents $\Delta z = |Z_{H1} - Z_{H2}|$ entre les nombres de dents $Z_{H1} - Z_{H2}$ des dentures intérieures (29, 30) des deux éléments de carter (5, 14 ; 6, 15) est égale ou inférieure au nombre p des satellites (31, 32), en particulier au nombre de satellites (31, 32) en prise :

$$\Delta z = \left| Z_{H1} - Z_{H2} \right| \leq p.$$

11. Train d'engrenage planétaire (1) selon l'une des revendications 6 à 10, **caractérisé en ce que** les dentures (29, 30) sur les faces intérieures des deux éléments de carter (5, 14 ; 6, 15) présentent différents quotients à partir de diamètre primitif de référence d et division p :

$$\Delta(d/p) = \left| d_{H1}/p_{H1} - d_{H2}/p_{H2} \right| > 0.$$

12. Train d'engrenage planétaire (1) selon l'une des revendications 6 à 11, **caractérisé en ce que** les dentures (29, 30) sur les faces intérieures des deux éléments de carter (5, 14 ; 6, 15) se distinguent l'une de l'autre en ce qui concerne leur diamètre primitif de référence $d_{H1}$, $d_{H2}$ et/ou leur division $p_{H1}$, $p_{H2}$ de façon à ce que l'inéquation suivante soit remplie :

$$1/\pi \leq \Delta(d/p) = \left| d_{H1}/p_{H1} - d_{H2}/p_{H2} \right| \leq p/\pi.$$

13. Train d'engrenage planétaire (1) selon l'une des revendications 6 à 12, **caractérisé en ce que** les dentures (29, 30) sur les faces intérieures des deux éléments de carter (5, 14 ; 6, 15) présentent des diamètres primitifs de référence identiques d tandis que leurs divisions $p_{H1}$, $p_{H2}$ se distinguent l'une de l'autre :

$$\Delta d = d_{H1} - d_{H2} = 0 \; ;$$

$$p_{H1} / (p^* \left| z_{H1} - p \right| \leq \Delta p = \left| p_{H1} - p_{H2} \right| \leq p_{H1} / \left| z_{H1} - 1 \right|.$$

14. Train d'engrenage planétaire (1) selon l'une des revendications précédentes, **caractérisé en ce qu'**au moins un satellite (31, 32) présente un évidement concentrique par rapport à son axe longitudinal (35), de préférence un trou, en particulier un trou traversant dont le diamètre intérieur est mesuré de préférence de façon telle que l'épaisseur de paroi restante du pied de dent au trou intérieur soit égale ou inférieure au module de dent triple du satellite (31, 32), de préférence égale ou inférieure au module de dent double, en particulier égale ou inférieure au module de dent simple.

15. Train d'engrenage planétaire (1) selon l'une des revendications précédentes, **caractérisé en ce qu'**au moins un satellite (32) présente une denture divisée transversalement par rapport à son axe longitudinal (35) avec des segments de denture (40, 41) tournés en opposition en sens azimutal, lesdits deux segments de denture (40, 41) tournés en opposition d'un satellite (32) présentent de préférence le même nombre de dents $z_p$, et/ou sont disposés sur des roues séparées qui sont engagées sur un arbre commun, en particulier sur un arbre cannelé à cales multiples (42).

FIG.1

FIG.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 9318360 U1
- DE 4224850 A1

- DE 2625429 A1